# EUROPÄISCHE PATENTSCHRIFT

(11) **EP 1 785 303 B1**
(45) Veröffentlichungstag und Bekanntmachung des Hinweises auf die Patenterteilung: **28.03.2012**
(21) Anmeldenummer: 06021790.8
(22) Anmeldetag: 18.10.2006
(51) Int. Cl.: B60J 7/12

(54) **Cabriolet-Notbetrieb**
Emergency operable cabriolet
Service de secours d'un cabriolet

(30) Priorität: 11.11.2005 DE 102005053832
(43) Veröffentlichungstag der Anmeldung: 16.05.2007
(73) Patentinhaber: Wilhelm Karmann GmbH, 49084 Osnabrück (DE)
(72) Erfinder: Böhnke, Achim, 49545 Tecklenburg (DE); Selle, Heinrich, 32549 Bad Oeynhausen (DE)
(74) Vertreter: Kronthaler, Schmidt & Coll.

(56) Entgegenhaltungen:
- EP-A- 1 241 036
- EP-A- 1 707 415
- DE-A1- 3 738 606
- DE-A1- 10 217 784

## Beschreibung

Die Erfindung betrifft ein Cabriolet-Fahrzeug mit beweglichen Dach- und/oder Deckelteilen nach dem Oberbegriff des Anspruchs 1. Ein solches Cabriolet-Fahrzeug ist aus z.B DE 102 17 784 bekannt.

Es ist bekannt, bei Cabriolet-Fahrzeugen manuelle Notbetätigungen solcher Teile vorzusehen, die im Normalbetrieb motorisch bewegbar sind. Mit Hilfe der Notbetätigung soll es auch bei Störung der motorischen Bewegbarkeit zumindest möglich sein, das Dach zu schließen und so trotz der Störung zum Beispiel auf einen Regenschauer reagieren oder das Fahrzeug gesichert abstellen zu können, ohne vorher eine Werkstatt anfahren zu müssen. Für die Notbetätigung sind häufig kosten- oder gewichtsaufwendige Werkzeuge zu verwenden, die zum Beispiel eine Eingriffsstellung zwischen Zahnrädern einer Antriebswelle und weiteren Kraftvermittlern aufheben.

Die DE 198 01 853 C1 zeigt für einen Verdeckkastendeckel eine manuelle Notbetätigung, deren Durchführung eine stabile Stange, z. B. einen Radmutter-Schlüssel, erfordert. Ein solches Werkzeug hat ein hohes Gewicht und ist unhandlich. Zudem ist hier keine vor dem Verdeckkastendeckel liegende Hutablage vorgesehen. Eine Lösung für deren Bewegung ist daher dieser Schrift nicht zu entnehmen.

Der Erfindung liegt das Problem zugrunde, hier eine Verbesserung zu erreichen.

Die Erfindung löst dieses Problem durch ein Cabriolet-Fahrzeug mit den Merkmalen des Anspruchs 1. Vorteilhafte Ausgestaltungen der Erfindung ergeben sich aus den weiteren Ansprüchen 2 bis 10.

Mit der Erfindung ist auch für andere Teile als eine Hutablage über den federbeaufschlagten Mitnehmer zwischen einer Antriebswelle und einem die Antriebskraft weiterleitenden Kraftvermittler während der Notbetätigung ein Stillstand der Antriebswelle des Motors ermöglicht, wobei der Mitnehmer durch Krafteinwirkung überbrückbar und dadurch bezüglich seiner Lage zur Antriebswelle in eine Freigabestellung versetzbar ist. Dieses Prinzip ist somit universell für Notbetätigungen an zu bewegenden Teilen verwendbar.

Eine konstruktiv einfache Ausbildung sieht vor, daß der Mitnehmer bei Durchführung der Notbetätigung allein durch die von außen ausgeübte Druckkraft von einer Eingriffsnut in eine über den Umfang der Antriebswelle versetzte weitere Eingriffsnut eines mit der Antriebswelle starr verbundenen Rotationskörpers verlagerbar ist. Dabei reicht die translatorisch aufgebrachte Druckkraft für die Verlagerung über den Umfang aus. Der Rotationskörper kann in diesem Bereich eine mehr oder weniger geradlinige Randkante zwischen den beiden Eingriffsnuten aufweisen.

Im einfachsten Fall ist der Mitnehmer durch eine Feder selbst gebildet. Dies minimiert die Anzahl der benötigten Teile. Zudem hat die metallische Feder eine hohe Abriebfestigkeit und schleift sich auch nach vielen manuellen Notbetätigungen nicht ab.

Wenn ein nach Durchführung der Notbetätigung wieder funktionierender Antrieb die Antriebswelle derart dreht, dass der Mitnehmer in die ursprüngliche Eingriffsnut zurückversetzbar ist, kann anschließend der Bewegungsablauf in regulärer Weise stattfinden, ohne dass sich ein Bediener darum kümmern müsste. Nach Durchführung der Notbetätigung muß sich der Benutzer daher keine Gedanken machen, ein herausgedrücktes Teil wieder zurückzudrücken oder sonst irgendwelche wieder in den Normalbetrieb zurückführende Maßnahmen auszuführen.

Bei einer Weiterbildung der Erfindung ist ein durch die Werkzeugfreiheit einfaches Bewegen eines als Verkleidung ausgebildeten Dachteils in eine freigebende Stellung ermöglicht. Mit der werkzeugfreien Bedienung ist ein schweres und teures Zusatzwerkzeug für die Notbetätigung vollständig entbehrlich. Der federbeaufschlagte Kontakt zwischen Antriebswelle und Kraftvermittler wird durch Druckkrafteinwirkung verlagert, bleibt allerdings vorteilhaft an einer anderen Kontaktstelle erhalten. Bei Wiederanlaufen des Antriebs kann so die sichere Funktion ohne manuelle Maßnahmen wieder eingeleitet werden. Zudem muß außerhalb des Kontakts des Mitnehmers keine Relativbewegung für die Notbetätigung durchgeführt werden. Ein Reibungsabrieb ist dadurch minimiert.

Sofern die Verkleidung durch Druckeinwirkung von oben aus einer nahezu horizontalen Abdeckstellung in eine aufgerichtete Freigabestellung verlagerbar ist, zum Beispiel durch Schwenken um eine horizontale Querachse oder über ein Mehrgelenk, kann die erforderliche Kraft einfach durch Gewichtskraft des Bedieners aufgebracht werden, indem dieser sich mit seinem Eigengewicht auf eine Kante der oft auch als Hutablage bezeichneten Verkleidung stützt. Dennoch kann bei einer Gewichtsverteilung auf die ganze Tiefenerstreckung der Hutablage diese auch als Sitzplatz für besondere Anlässe, zum Beispiel Paraden oder ähnliches, verwendet werden, insbesondere dann, wenn die Verkleidung in Abdeckstellung bezüglich der Fahrtrichtung fluchtend vor einem das geöffnete Dach im wesentlichen übergreifenden Deckelteil gelegen ist und somit ein Teil der Last von dem Deckelteil aufnehmbar ist.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine perspektivische Ansicht eines schematisch angedeuteten erfindungsgemäßen Cabriolet-Fahr- zeugs von schräg hinten bei geöffnetem Dach und in Abdeckstellung befindlicher Verkleidung, wo- bei ein dahinter eingezeichnetes Deckelteil transparent eingezeichnet ist,
- Fig. 2: eine Einzelteildarstellung der herausgezeich- neten Hutablage in Abdeckstellung nach Fig.1,
- Fig. 3a: eine Seitenansicht der Hutablage nach Fig. 2 in Abdeckstellung nach Fig. 1,
- Fig. 3b: eine ähnliche Ansicht wie Fig. 3a, jedoch mit heruntergedrückter, in Freigabestellung befind- licher Stellung der Hutablage,

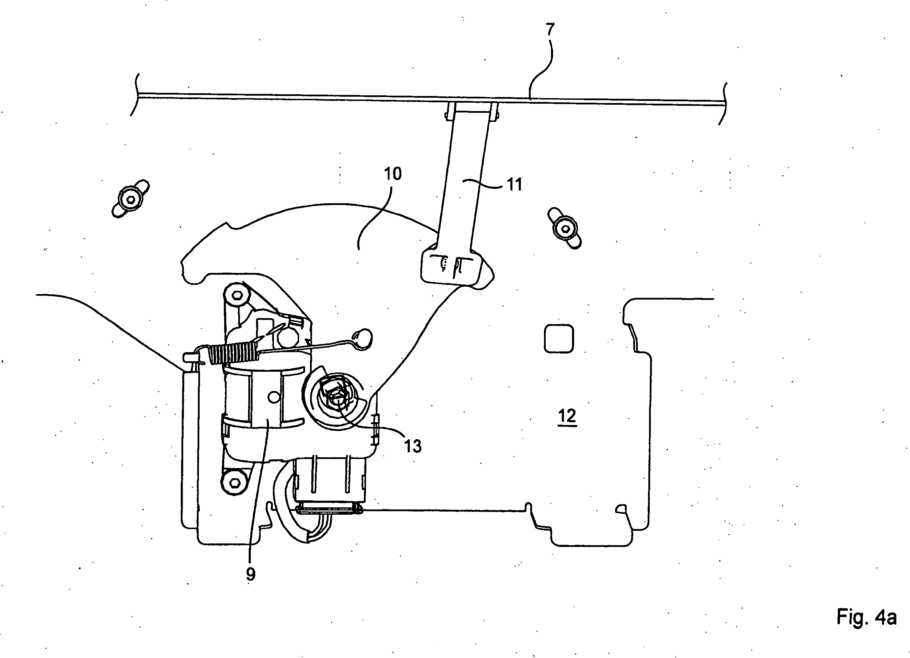

- Fig. 4a: eine Ansicht von hinten auf den Antriebsmecha- nismus in Abdeckstellung der Hutablage nach Fig. 3a,

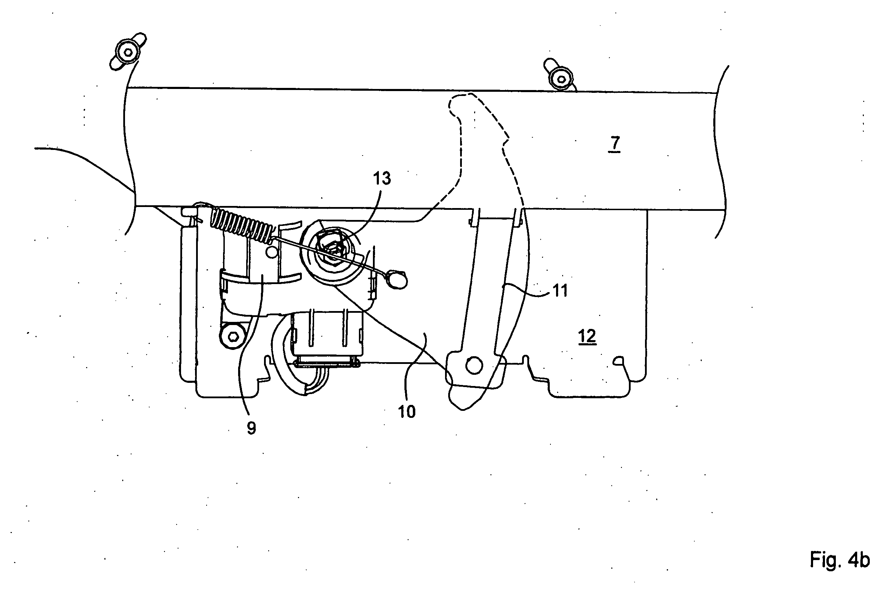

- Fig. 4b: eine ähnliche Ansicht wie Fig. 4a, jedoch bei manuell heruntergedrückter, in Freigabestellung befindlicher Hutablage gemäß Fig. 3b,
- Fig. 5a: eine vergrößerte Detailansicht der Antriebswelle und eines daran über einen Mitnehmer beweglichen Kraftüberträgers in Abdeckstellung der Hutablage nach Fig. 4a,
- Fig. 5b: eine ähnliche Ansicht wie Fig. 5a, jedoch in manuell heruntergedrückter Freigabestellung der Hutablage,

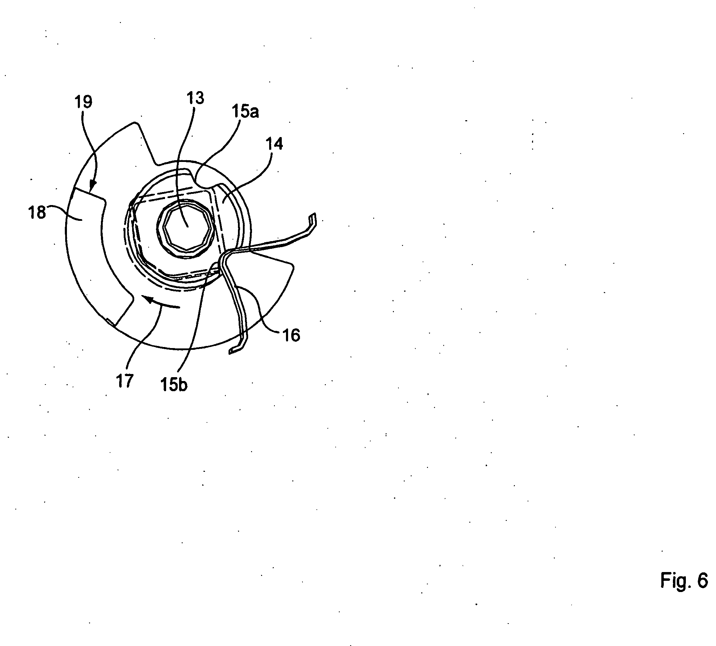

- Fig. 6: eine vergrößerte Detailansicht der Antriebswelle und eines darauf starr gehaltenen Rotationskörpers mit in eine untere Nut eingreifendem Mitnehmer in Stellung nach Fig. 5b.

Das erfindungsgemäße Cabriolet-Fahrzeug 1 kann sowohl ein Zweisitzer als auch ein Cabriolet-Fahrzeug mit einem größeren Innenraum und etwa zwei Sitzreihen hintereinander sein.

Es umfaßt ein bewegliches Dach mit in sich flexiblen oder starren Dachteilen, das in seinem geöffneten Zustand im heckwärtigen Fahrzeugbereich unterhalb einer Durchtrittsebene 2 in der Karosserie 3 ablegbar ist.

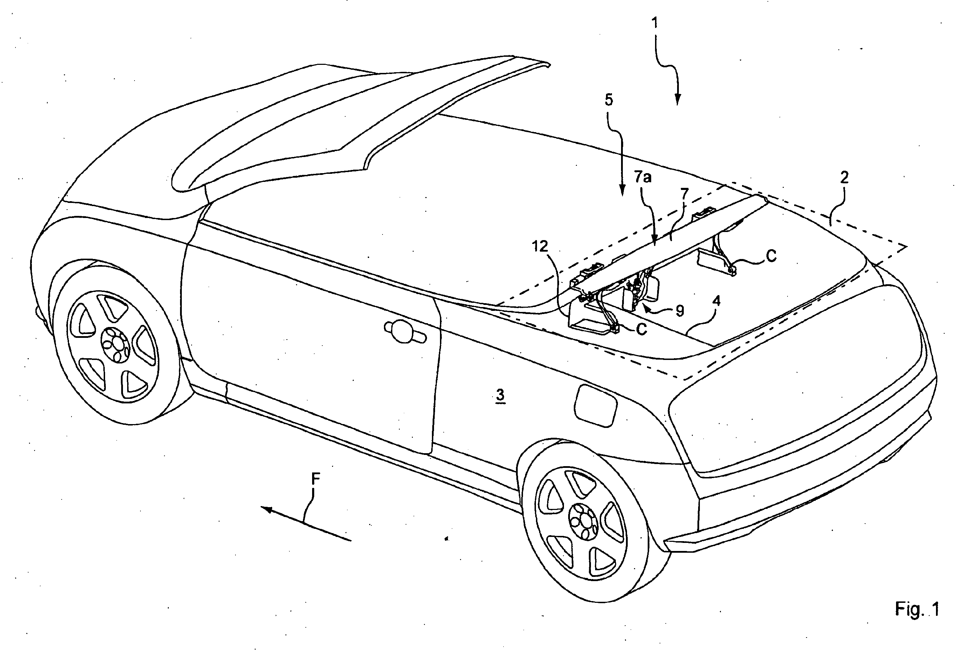

Im gezeichneten Ausführungsbeispiel ist ein großer hinterer Teil der Durchtrittsebene 2 des Daches in die Karosserie 3 von einem hier schwenkbaren Verdeckkastendeckel 4 abdeckbar, der in Fig. 1 transparent eingezeichnet ist. Daran schließt bei geschlossenem Dach und geschlossenem Deckelteil 4 in Fahrtrichtung F und im Nahbereich hinter dem Insassenraum 5 eine bewegliche Verkleidung 7 mit geringer Tiefe an, die an die Innenraumoptik angepaßt sein kann und oft auch als Hutablage bezeichnet wird.

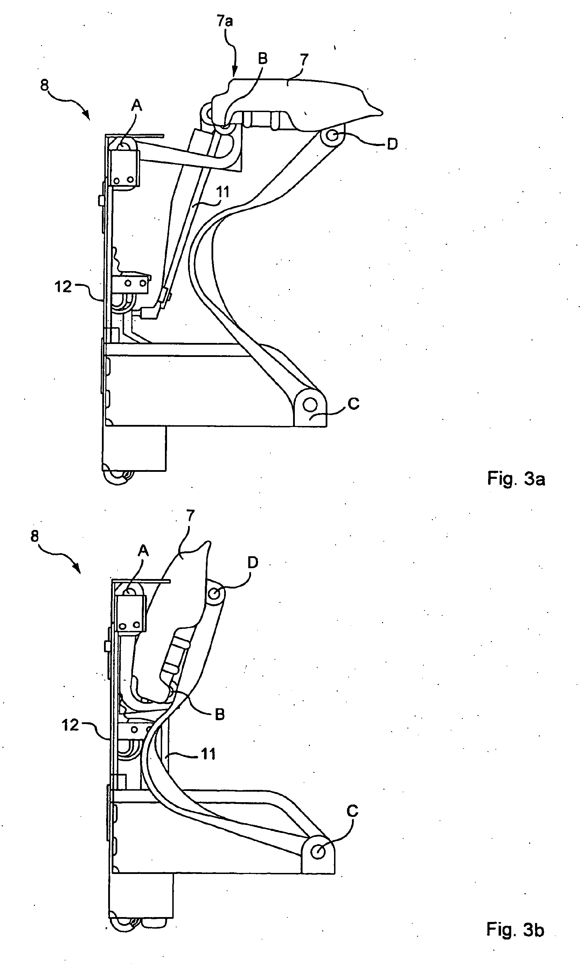

Diese Verkleidung 7 ist hier von einem über seine Außenfläche durchgängigen Leichtbauteil, beispielweise aus Kunststoff oder einem metallischen Schaumwerkstoff, ausgebildet. Auch eine Mehrteiligkeit in Fahrzeuglängs-und/oder -querrichtung ist grundsätzlich möglich. Die Verkleidung 7 ist aus der im wesentlichen horizontalen Abdeckstellung nach Fig. 3a in eine den Durchtrittsraum für die Dachbewegung freigebende Stellung nach Fig. 3b vorwärts und abwärts verlagerbar und hierfür beispielsweise an einem Viergelenk A, B, C, D gehalten.

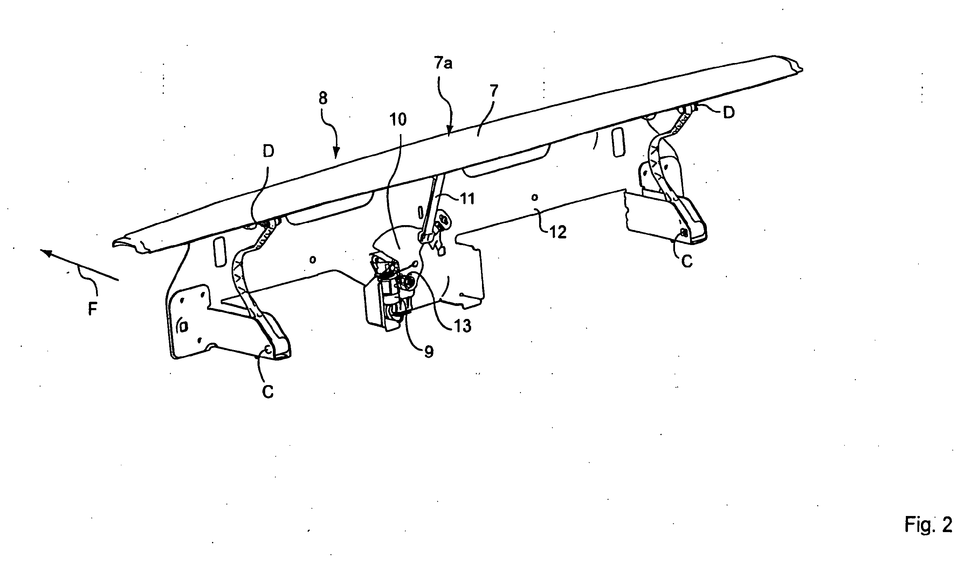

Die Verkleidung 7 ist dabei insgesamt Bestandteil einer modularen Einheit 8, die als vormontierte Einheit in einen Karosserierohbau einsetzbar und in Fig. 2 dargestellt ist. Sie umfaßt einen oder mehrere Antriebe 9 und zugehörige(n) Kraftvermittler zur Weiterleitung der Antriebskraft an die Hutablage 7, hier als Kreissegmentscheibe 10 mit einer daran gehaltenen Zug-Schub-Stange 11 ausgebildet.

Das Modul 8 umfaßt des weiteren eine nahezu vertikal stehende Vorderwand 12, die über Befestigungsmittel an einer den Insassenraum 6 begrenzenden Rückwand der Karosserie 4 festlegbar ist. Beispielsweise können in äußeren Eckbereichen vier von Schrauben zu durchgreifende Bohrungen vorgesehen sein. Schweißarbeiten zur Befestigung des Moduls 8 sind dann nicht erforderlich. Es kann zudem insbesondere an verschiedenen Fahrzeugtypen montierbar sein, wobei das Modul 8 hierfür mit jeweils anderen Verkleidungen 7 versehen sein kann. Diese können in Anpassung an die Verhältnisse im jeweiligen Fahrzeug eine jeweils unterschiedliche Breite und/oder Tiefe aufweisen und zudem abweichend gestaltet sein, etwa mit unterschiedlichen Textilien kaschiert oder unterschiedlich lackiert sein.

Der in der Zeichnung dargestellte Antrieb 9 ist von einem handelüblichen Elektromotor gebildet; auch ein Hydraulik oder Pneumatikantrieb kommt alternativ in Betracht. Hier umfaßt der Antrieb 8 eine Antriebswelle 13 mit einer längs zum Fahrzeug liegenden Komponente. Auf dieser Welle 13 ist ein mitbewegbarer Rotationskörper 14 starr aufmontiert, so daß es zwischen diesem und der Welle 13 zu keiner Relativbewegung kommt. Der Rotationskörper 14 umfaßt mehrere - hier genau zwei - Eingriffsnuten 15a, 15b für einen Mitnehmer 16 des Kraftvermittlers 10. Die Antriebswelle 13 des Antriebs 9 - und mit ihr der Rotationskörper 14 - kann während der unten noch näher erläuterten manuellen Notbetätigung selbst unbewegt verbleiben.

Der Mitnehmer 16 ist federnd gelagert und kann in einfacher und hier dargestellter Konstruktion selbst durch eine starke Feder gebildet sein, die gemäß der Zeichnung als Bügel ausgeformt ist, dessen äußere Enden in einer angepaßten Tasche des Kraftvermittlers 10 aufgenommen sind.

Während des normalen Betriebs ist der Mitnehmer 16 dauernd in der Eingriffsnut 15a des Rotationskörpers 14 aufgenommen und durch dessen Rotation zwischen der Abdeckstellung nach Fig. 3a und der Freigabestellung nach Fig. 3b beweglich.

Für eine manuelle Notbetätigung, die auch bei einer Blockierung des Antriebs 9 und Stillstand der Welle 13 eine Verlagerung der Hutablage 7 in die Freigabestellung - und damit die Freigabe des Raums für ein Schließen des Daches - ermöglicht, kann die Hutablage werkzeugfrei durch Abwärtsdruck auf ihren vorderen Kantenbereich 7a in die aufrechte Freigabestellung überführt werden. Dennoch kann, da sich beim Abwärtsdrücken des vorderen Kantenbereichs 7a der hintere Kantenbereich der Hutablage 7 anhebt (Fig. 3b) durch Gewichtsverteilung auf die gesamte Tiefe der Hutablage 7 und den vorderen Bereich des Deckelteils 4 diese auch als Sitzplatz genutzt werden. Die zum Abwärtsdrücken erforderliche Kraft auf den vorderen Kantenbereich 7a kann beispielsweise bei etwa 100 N liegen.

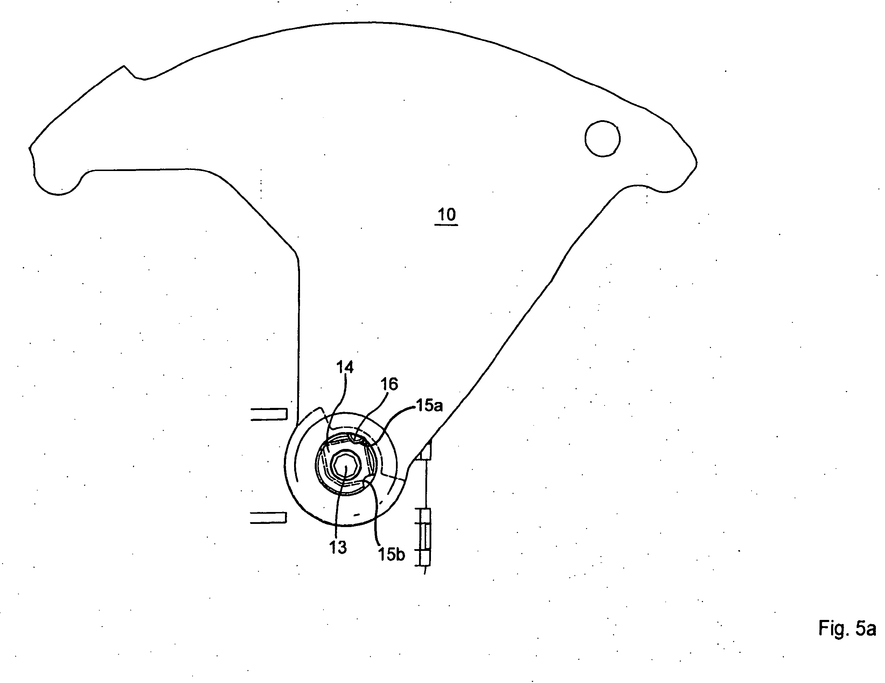

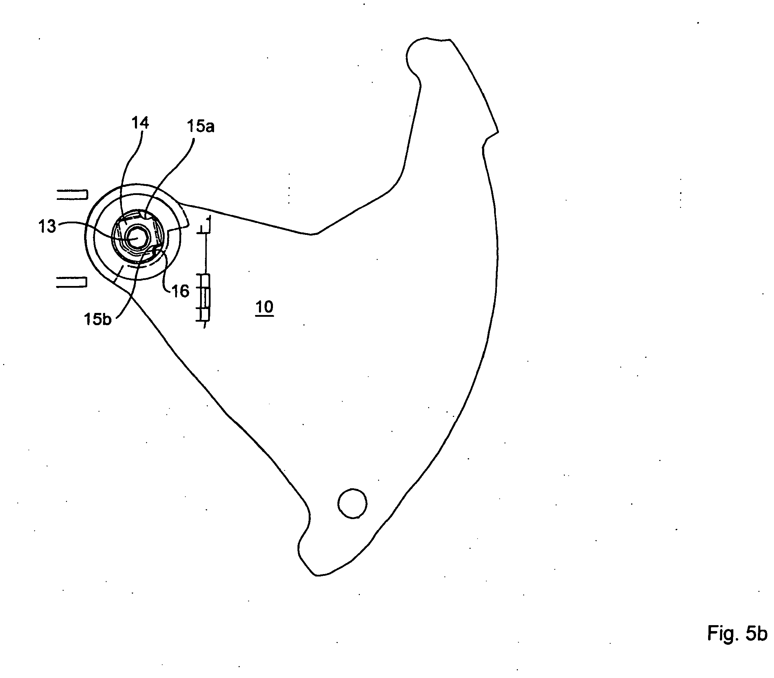

Dabei wird der federbeaufschlagte Mitnehmer 16 über die Zug-Schub-Stange 11 und den darüber um die stehende Welle 13 abwärts schwenkenden Kraftvermittler 10 aus der ersten Eingriffsnut 15a in die zweite Eingriffsnut 15b des stehenden Rotationskörpers 14 gedrückt (Übergang von Fig. 5a zu Fig. 5b). Dort entspannt die Feder wieder so weit, daß die Freigabestellung einrastet und die Hutablage 7 in dieser Stellung gesichert ist. An Stelle der Nuten 15a, 15b könnten auch zum Beispiel bei einer anders geformten Feder nach außen ragende Ausformungen vorgesehen sein.

Ein solches Prinzip des Überdrückens einer Feder ist auch bei anderen Teilen als der Hutablage 7 möglich, zum Beispiel für eine Bewegung des Daches selbst oder für das Öffnen oder Schließen eines Deckelteils 4.

Ein wesentlicher Vorteil der Erfindung liegt auch darin, daß ein nach Durchführung der Notbetätigung wieder funktionierender Antrieb 9 die Antriebswelle 13 dann im Öffnungssinn in Richtung des Pfeils 17 automatisch derart dreht, daß der Mitnehmer 16 in die ursprüngliche Eingriffsnut 15a zurückversetzt wird. Dadurch kann anschließend der Bewegungsablauf in regulärer Weise stattfinden, ohne daß sich ein Bediener darum kümmern müßte oder eine Fehlbedienung möglich wäre. Erst recht muß keine manuelle Gegenbewegung zur eigentlichen Notbetätigung, also etwa ein manuelles Hochziehen der Hutablage 7, ausgeführt werden.

Im Ausführungsbeispiel ist noch eine abgestufte Drehhilfe 18 am Rotationskörper 14 vorgesehen, mit deren Vorderkante 19 ein kraftschlüssiger Eingriff zum schwenkbaren Kraftvermittler 10 erreichbar ist, so daß auch im Normalbetrieb stets ein sicheres Aufschwenken der Hutablage 7 in die Freigabestellung unterstützt ist.

## Patentansprüche

1. Cabriolet-Fahrzeug (1) mit durch zumindest einen Antrieb (9) beweglichen Dach- und/oder Deckelteilen (7), für die eine oder mehrere bei Störung der Antriebsfunktion bedienbare Notbetätigung(en) vorgesehen ist,
**dadurch gekennzeichnet,**
**daß** durch die Notbetätigung zumindest ein federbeaufschlagter Mitnehmer (16) zwischen einer Antriebswelle (13) und einem die Antriebskraft weiterleitenden Kraftvermittler (10) bezüglich seiner Lage zur Antriebswelle (13) in eine Freigabestellung versetzbar ist.

2. Cabriolet-Fahrzeug (1) nach Anspruch 1,
**dadurch gekennzeichnet,**
**daß** der Mitnehmer (16) bei Durchführung der Notbetätigung von einer ersten Eingriffsnut (15a) in eine azimutal versetzte weitere Eingriffsnut (15b) eines mit der Antriebswelle (13) starr verbundenen Rotationskörpers (14) verlagerbar ist.

3. Cabriolet-Fahrzeug (1) nach einem der Ansprüche 1 oder 2,
**dadurch gekennzeichnet,**
**daß** der Mitnehmer (16) durch eine Feder gebildet ist.

4. Cabriolet-Fahrzeug (1) nach einem der Ansprüche 1 bis 3,
**dadurch gekennzeichnet,**
**daß** bei nach Durchführung der Notbetätigung wieder funktionierendem Antrieb (9) dessen Antriebswelle (13) derart bewegbar ist, daß der Mitnehmer (16) vor weiterer Bewegung in die ursprüngliche Eingriffsnut (15a) zurückversetzbar ist.

5. Cabriolet-Fahrzeug (1) nach einem der Ansprüche 1 bis 4,
**dadurch gekennzeichnet,**
**daß** ein im hinteren Fahrzeugbereich in der Karosserie (3) unterhalb einer Durchtrittsebene (2) ablegbares Dach vorgesehen ist, wobei ein Teil der Durchtrittsebene (2) bei geöffnetem Dach von dem durch den zumindest einen Antrieb (9) beweglichen, bei geschlossenem Dach im Nahbereich hinter dem Insassenraum (5) gelegenen und als Verkleidung (7) ausgebildeten Dachteil, häufig auch als Hutablage bezeichnet, abdeckbar ist, wobei für die Verkleidung (7) die bei Störung der Antriebsfunktion werkzeugfrei bedienbare Notbetätigung vorgesehen ist.

6. Cabriolet-Fahrzeug (1) nach Anspruch 5,
**dadurch gekennzeichnet,**
**daß** die Verkleidung (7) durch Druckeinwirkung von oben aus einer nahezu horizontalen Abdeckstellung in eine aufgerichtete Freigabestellung verlagerbar ist.

7. Cabriolet-Fahrzeug (1) nach einem der Ansprüche 5 oder 6,
**dadurch gekennzeichnet,**
**daß** die Verkleidung (7) in Abdeckstellung bezüglich der Fahrtrichtung (F) vor einem das geöffnete Dach im wesentlichen übergreifenden Deckelteil (4) gelegen ist.

8. Cabriolet-Fahrzeug (1) nach einem der Ansprüche 5 bis 7,
**dadurch gekennzeichnet,**
**daß** die Verkleidung (7) um zumindest eine horizontal und quer zum Fahrzeug liegende Achse (A;B;C;D) schwenkbeweglich ist.

9. Cabriolet-Fahrzeug (1) nach einem der Ansprüche 5 bis 8,
**dadurch gekennzeichnet,**
**daß** die Verkleidung (7) über ihre gesamte Breite als einstückiges Plattenteil ausgebildet ist.

10. Cabriolet-Fahrzeug (1) nach einem der Ansprüche 1 bis 9,
**dadurch gekennzeichnet,**
**daß** der Antrieb (9) von einem Elektromotor gebildet ist, dessen Antriebswelle (13) während der manuellen Notbetätigung unbewegt ist.

## Claims

1. A convertible vehicle (1) comprising roof and/or lid members (7) which are movable by at least one drive (9) and for which one or more emergency actuation mechanism(s) is/are provided in case the drive malfunctions,
**characterised in that**
at least one spring-loaded entraining member (16) between a drive shaft (13) and a force transmitter (10) transmitting the drive force is displaceable by the emergency actuation mechanism into a release position with respect to the drive shaft (13).

2. The convertible vehicle (1) according to claim 1, **characterised in that**, when carrying out the emergency actuation, the entraining member (16) can be shifted from a first engagement groove (15a) to another, azimuthally offset engagement groove (15b) of a rotary body (14) rigidly connected with the drive shaft (13).

3. The convertible vehicle (1) according to any one of claims 1 or 2, **characterised in that** the entraining member (16) is formed by a spring.

4. The convertible vehicle (1) according to any one of claims 1 to 3, **characterised in that**, when the drive (9) is functional again after carrying out the emergency actuation, the drive shaft (13) of the drive (9) can be moved such that the entraining member (16) can be replaced into the initial engagement groove (15a) prior to any further movement.

5. The convertible vehicle (1) according to any one of claims 1 to 4, **characterised in that** a roof is provided which can be stowed in the rear part of the vehicle body (3) below a plane of passage (2) and, when the roof is opened, part of the plane of passage (2) can be covered by the roof part that is movable by the at least one drive (9), and is located in the region close to and behind the passenger compartment (5) when the roof is closed, said roof part being provided as a covering (7), often referred to as the parcel shelf, and the emergency actuation mechanism, which is operable without the use of tools in cases of drive malfunctions, being provided for the covering (7).

6. The convertible vehicle (1) according to claim 5, **characterised in that** the covering (7) can be moved from an approximately horizontal covering position into an upright uncovering position by applying pressure from above.

7. The convertible vehicle (1) according to any one of claims 5 or 6, **characterised in that**, with respect to the direction of travel (F), the covering (7), in the covering position, is located in front of a lid member (4) which substantially spans the opened roof.

8. The convertible vehicle (1) according to any one of claims 5 to 7, **characterised in that** the covering (7) can pivot about at least one axis (A;B;C;D) extending horizontally and transversely with respect to the vehicle.

9. The convertible vehicle (1) according to any one of claims 5 to 8, **characterised in that** the covering (7) is provided as a one-piece plate part over its entire width.

10. The convertible vehicle (1) according to any one of claims 1 to 9, **characterised in that** the drive (9) is formed by an electric motor whose drive shaft (13) does not move during manual emergency actuation.

## Revendications

1. Véhicule cabriolet (1) comprenant des éléments de toit et/ou de couvercle (7) qui sont déplaçables par au moins un entraînement (9) et pour lesquels on prévoit un ou plusieurs mécanisme(s) d'actuation d'urgence en cas de dysfonctionnement de l'entraînement,
**caractérisé en ce que**
l'on peut déplacer, à l'aide dudit mécanisme d'actuation d'urgence, au moins un entraîneur (16), qui est actionné par un ressort et disposé entre un arbre d'entraînement (13) et un transmetteur de force (10) transmettant la force d'entraînement, vers une position de libération par rapport audit arbre d'entraînement (13).

2. Véhicule cabriolet (1) selon la revendication 1, **caractérisé en ce que** l'entraîneur (16) peut être déplacé, lors de l'actuation d'urgence, d'une première rainure d'engrènement (15a) vers une autre rainure d'engrènement (15b), décalée en azimut, d'un corps de rotation (14) relié de manière rigide avec ledit arbre d'entraînement (13).

3. Véhicule cabriolet (1) selon l'une quelconque des revendications 1 ou 2, **caractérisé en ce que** l'entraîneur (16) se présente sous la forme d'un ressort.

4. Véhicule cabriolet (1) selon l'une quelconque des revendications 1 à 3, **caractérisé en ce que**, l'entraînement (9) ayant remis en fonctionnement par l'actuation d'urgence, on peut faire tourner l'arbre d'entraînement (13) dudit entraînement (9) de manière à pouvoir rentrer l'entraîneur (16) dans la rainure d'engrènement initiale (15a) avant tout autre mouvement.

5. Véhicule cabriolet (1) selon l'une quelconque des revendications 1 à 4, **caractérisé en ce que** l'on prévoit un toit qui peut être rangé à l'arrière du véhicule, dans la carrosserie (3), au-dessous d'un plan de passage (2), ce dernier pouvant être partiellement couvert, lors de l'ouverture du toit, par l'élément de toit qui est déplaçable par ledit au moins un entraînement (9) et se trouve à proximité de l'habitacle (5) et derrière celui-ci lorsque le toit est fermé, ledit élément de toit étant réalisé sous la forme d'un habillage (7), souvent appelé plage arrière, et le mécanisme d'actuation d'urgence, que l'on peut actionner sans utilisation d'outils en cas de dysfonctionnement de l'entraînement, étant prévu pour ledit habillage (7).

6. Véhicule cabriolet (1) selon la revendication 5, **caractérisé en ce que** l'habillage (7) peut être déplacé d'une position de couvrement presque horizontale vers une position debout de libération en appuyant sur l'habillage (7).

7. Véhicule cabriolet (1) selon l'une quelconque des revendications 5 ou 6, **caractérisé en ce que**, dans sa position de couvrement, l'habillage (7) se trouve, par rapport à la direction de marche (F), avant un élément de couvercle (4) sensiblement couvrant le toit ouvert.

8. Véhicule cabriolet (1) selon l'une quelconque des revendications 5 à 7, **caractérisé en ce que** l'habillage (7) peut basculer autour d'au moins un axe (A;B;C;D) qui s'étend en direction horizontale et transversale par rapport au véhicule.

9. Véhicule cabriolet (1) selon l'une quelconque des revendications 5 à 8, **caractérisé en ce que** l'habillage (7) est constitué sur toute sa largeur sous forme d'une plaque réalisée en une seule pièce.

10. Véhicule cabriolet (1) selon l'une quelconque des revendications 1 à 9, **caractérisé en ce que** l'entraînement (9) est constitué par un moteur électrique dont l'arbre d'entraînement (13) ne tourne pas pendant l'actuation d'urgence manuelle.
